# EUROPÄISCHE PATENTSCHRIFT

(11) **EP 2 505 828 B1**
(45) Veröffentlichungstag und Bekanntmachung des Hinweises auf die Patenterteilung: **10.06.2015**
(21) Anmeldenummer: 12004396.3
(22) Anmeldetag: 01.12.2006
(51) Int. Cl.: F03D 7/02, F03D 7/04

(54) **Verfahren zum Betreiben einer Windenergieanlage**
Method for operating a wind turbine
Procédé de fonctionnement d'une éolienne

(30) Priorität: 21.02.2006 DE 102006007919
(43) Veröffentlichungstag der Anmeldung: 03.10.2012
(62) Teilanmeldung aus: 06024888.7
(73) Patentinhaber: Nordex Energy GmbH, 22419 Hamburg (DE)
(72) Erfinder: Kabatzke, Wolfgang, 21502 Geesthacht (DE); Richter, Kay, 22851 Norderstedt (DE)
(74) Vertreter: Hauck Patentanwaltspartnerschaft mbB

(56) Entgegenhaltungen:
- EP-A- 0 008 584
- EP-A- 1 548 279
- EP-A2- 1 561 945
- EP-B1- 1 007 844
- FR-A1- 2 821 391
- GB-A- 2 023 237
- HAU ERICH ED - ERICH HAU: "PRG 13.1.1 Aerodynamische Betriebsweise des Rotors", 1. Januar 1996 (1996-01-01), WINDKRAFTANLAGEN : GRUNDLAGEN, TECHNIK, EINSATZ, WIRTSCHAFTLICHKEIT, SPRINGER, BERLIN; DE, PAGE(S) 393 - 394, XP007917552, ISBN: 978-3-540-57430-9

## Beschreibung

Die Erfindung betrifft ein Verfahren zur Drehzahlregelung einer drehzahlvariablen Windenergieanlage durch Variieren des Blattanstellwinkels und des Moments für den Aufschaltvorgang auf das Netz. Die Windenergieanlage verfügt dazu über einen Momentregler und einen Blattanstellwinkelregler.

Drehzahlvariable Windenergieanlagen mit Moment- und Blattanstellwinkelregler sind bekannt. Bei der Blattanstellwinkelregelung wird jedes Rotorblatt um seine Längsachse in seinem Blattanstellwinkel verstellt. Bei unterschiedlichen Blattanstellwinkeln nimmt das Rotorblatt jeweils ein anderes Moment aus dem Wind auf.

Für die Steuerung/Regelung der Windenergieanlagen ist bekannt, zwischen zwei Betriebsmodi zu unterscheiden. Der erste Betriebsmodus wird als Teillastbetrieb bezeichnet, in dem über die Vorgabe eines Drehmoments eine Drehzahlregelung erfolgt. Der zweite Betriebsmodus ist der Vollastbetrieb, in dem eine Drehzahlregelung über ein Verstellen des Anstellwinkels erfolgt.

Um eine optimale Leistungsausbeute mit der Windenergieanlage zu erzielen, wird die Drehzahl der Anlage im Teillastbereich auf das optimale Verhältnis zwischen Umfangsgeschwindigkeit des Rotors und Windgeschwindigkeit eingestellt (λₒₚₜ). Die Rotorblätter sind dabei auf einen Blattwinkel eingestellt, der das höchste Antriebsmoment für die Rotorwelle erzeugt. Die Drehzahl des Rotors wird im Teillastbereich über das am Generator und/oder Umrichter erzeugte Gegenmoment eingestellt.

Ist bei der Nenngeschwindigkeit das maximale Gegenmoment am Generator erreicht, so kann durch weiteres Erhöhen des Generatormoments die Drehzahl nicht länger im Arbeitspunkt gehalten werden. Eine Überlastung des Systems wird dann vermieden, indem der aerodynamische Wirkungsgrad der Blätter verschlechtert wird und diese aus dem optimalen Anstellwinkel herausgefahren werden. Die Drehzahl des Rotors wird somit nach Erreichen des maximalen Generatormoments über den Anstellwinkel der Blätter beeinflußt.

Um eine Windenergieanlage im geschilderten Teil- oder Vollastbetrieb betreiben zu können, muß die Anlage zunächst auf das Netz aufgeschaltet werden. Zuvor kann am Generator kein Gegendrehmoment erzeugt werden, weil ohne Verbindung zum Netz keine Ströme in den Generator eingeprägt werden können. Vor dem Aufschalten dreht sich der Rotor der Windenergieanlage daher in der Regel frei, mit dem Aufschalten wird eine elektrische Verbindung mit dem Netz hergestellt und ein Ansteuern der Windenergieanlage zur Einspeisung von elektrischer Leistung in das Netz setzt ein.

Für den Aufschaltvorgang ist eine gewisse Mindestdrehzahl des mit dem Rotor gekoppelten Generators, die sogenannte Synchronisierdrehzahl n_{sync}, erforderlich.

Aus der Druckschrift GB 2 023 237 A ist ein Verfahren zum Betreiben einer drehzahlstarr, betriebenen Windenergieanlage mit einem direkt netzgekoppelten Synchrongenerator bekannt geworden. Gleiches gilt für die Druckschrift EP 0 008 584 A1.

Aus EP 1 007 844 B1 ist eine drehzahlvariable Windenergieanlage bekannt, die einen Induktionsgenerator mit gewickeltem Rotor besitzt. Zur Betriebsführung ist bei der bekannten Windenergieanlage eine Drehmomentsteuerung und eine Steuerung für den Blattanstellwinkel bekannt, die unabhängig von der Drehmomentsteuerung arbeitet.

Bei der bekannten Windenergieanlage stellt die Blattanstellwinkelregelung unterhalb einer bestimmten, sehr niedrigen Drehzahl des Generators, die weit unterhalb der Synchronisierdrehzahl liegt, einen großen Blattanstellwinkel von z.B. 25° ein. Dadurch wird erreicht, daß auch bei sehr niedrigen Drehzahlen des Rotors ein ausreichendes Moment aus dem Wind aufgenommen wird, um den Rotor in Schwung zu versetzen. Sobald die vorgegebene, sehr niedrige Drehzahl des Generators erreicht ist, wird ein Blattanstellwinkel eingestellt, der dem optimalen Anstellwinkel für den Betrieb im Teillastbereich entspricht.

In demjenigen Drehzahlbereich, in dem der Aufschaltvorgang stattfindet, ist bei der bekannten Windenergieanlage demnach keine Regelung der Drehzahl über den Blattanstellwinkel vorgesehen, weil der Blattanstellwinkel bereits einen festen, für den Teillastbereich optimierten Wert angenommen hat. Da vor dem Aufschalten eine Beeinflußung der Drehzahl durch Vorgabe eines Moments am Generator ebenfalls nicht möglich ist, wird die Drehzahl vor dem Aufschalten überhaupt nicht reguliert.

Aus dem Lehrbuch "Windenergieanlagen - Systemauslegung, Netzintegration und Regelung" von Siegfried Heier, 4. Aufl. 2005, ist ein Verfahren zum Betreiben einer drehzahlvariablen Windenergieanlage mit den Merkmalen des Oberbegriffs des Anspruchs 1 bekannt geworden.

Davon ausgehend ist die Aufgabe der Erfindung, ein Verfahren zum Betreiben einer Windenergieanlage anzugeben, das den Aufschaltvorgang verbessert.

Die Aufgabe wird gelöst durch ein Verfahren zum Betreiben einer auf ein Netz aufschaltbaren Windenergieanlage mit einem Rotor mit variabler Drehzahl, einem Momentregler und einem Blattanstellwinkelregler, bei dem vor dem Aufschalten der Windenergieanlage die Drehzahl des Rotors durch Variieren des Blattanstellwinkels geregelt wird.

Dadurch kann die Drehzahl des Rotors und des mit dem Rotor gekoppelten Generators gegenüber einem freien Drehen stabilisiert werden. Der Aufschaltvorgang wird erleichtert, weil sowohl eine übermäßige Drehzahlsteigerung während bzw. vor dem Aufschaltvorgang, als auch ein Absinken der Drehzahl vermieden werden kann.

Gemäß einer Ausgestaltung erfolgt die Drehzahlregelung auf eine für das Aufschalten auf das Netz geeignete Synchronisierdrehzahl des Generators n_{sync}. Dadurch erfolgt die Stabilisierung der Drehzahl des Generators in einem für den Aufschaltvorgang geeigneten bzw. besonders bevorzugten Bereich.

In einer bevorzugten Ausgestaltung setzt die Drehzahlregelung erst ein, nachdem eine Synchronisierdrehzahl n_{sync} überschritten wurde. Dadurch kann der Blattanstellwinkel unterhalb der Synchronisierdrehzahl n_{sync} frei von der Regelung gewählt werden. Gleichzeitig wird die mit einem gewissen Energieverbrauch behaftete Regelung des Blattanstellwinkels nur dann beansprucht, wenn die für das Aufschalten erforderliche Drehzahl tatsächlich erreicht worden ist.

Zweckmäßigerweise ist vorgesehen, beim Anfahren der Windenergieanlage vor Beginn der Drehzahlregelung den Blattanstellwinkel ausgehend von einem maximalen Blattanstellwinkel Φₘₐₓ kontinuierlich zu verringern. Dadurch kann der Blattanstellwinkel während des Anfahrens der Windenergieanlage, d.h. über einen großen Drehzahlbereich, in einem für maximale Momentaufnahme aus dem Wind günstigen Bereich gehalten werden. Die Windenergieanlage kann so schneller auf die für das Aufschalten erforderliche Drehzahl gebracht werden, als bei einer festen oder stufenweise erfolgenden Verstellung des Blattanstellwinkels.

Bei einer Ausgestaltung erfolgt die Verringerung des Blattanstellwinkels in Abhängigkeit von der Drehzahl. Dadurch kann erreicht werden, daß bei jeder Drehzahl der optimale Blattanstellwinkel eingestellt wird. Auf diese Weise kann auch bei schwankenden Windgeschwindigkeiten ein schnellstmögliches Anlaufen des Rotors erzielt werden.

Bei der Erfindung wird die Verringerung des Blattanstellwinkels bis zu einem minimalen Blattanstellwinkel Φₛₜₐᵣₜ durchgeführt. Der minimale Blattanstellwinkel Φₛₜₐᵣₜ kann dabei größer sein als der für den Teillastbetrieb optimierte Blattanstellwinkel. In diesem Fall ist sichergestellt, daß nach dem Aufschalten, wenn der Rotor zusätzlich mit dem Gegendrehmoment des Generators belastet wird, dieses Moment durch weiteres Verringern des Blattanstellwinkels zusätzlich aus dem Wind aufgenommen werden kann. Vor dem Aufschalten wird der minimale Blattanstellwinkel Φₛₜₐᵣₜ nicht unterschritten.

Bei der Erfindung ist vorgesehen, den Wert für den minimalen Blattanstellwinkel Φₛₜₐᵣₜ abhängig von der Windgeschwindigkeit zu wählen. Dadurch können bei kleineren Windgeschwindigkeiten kleinere minimale Blattanstellwinkel Φₛₜₐᵣₜ gewählt werden, um auch bei geringem garantierten Windangebot die Synchronisierdrehzahl in einer vorgegebenen Zeitspanne sicher zu erreichen. Außerdem kann im Falle hoher Windgeschwindigkeiten durch Wahl eines größeren Winkels Φₛₜₐᵣₜ ein unnötig starkes Überschwingen der Drehzahl nach Erreichen der Synchronisierdrehzahl verhindert werden. Der Aufschaltvorgang erfordert dann geringere Einstellbewegungen des Blattwinkels und verläuft wesentlich schonender für das mechanische System.

Gemäß einer Ausgestaltung ist vorgesehen, daß nach dem Aufschalten der Blattanstellwinkel den minimalen Blattanstellwinkel Φₛₜₐᵣₜ Φₛₜₐᵣₜ unterschreitet. Dadurch kann die Regelung des Blattanstellwinkels nach dem Aufschalten den Blattanstellwinkel über den gesamten Bereich frei auf einen optimierten Blattanstellwinkel regeln.

Für Blattanstellwinkelregler und Momentregler ist bevorzugt vorgesehen, daß diese nach dem Aufschalten gleichzeitig betrieben werden.

Die Erfindung wird nachfolgend anhand eines Ausführungsbeispiels und zwei Figuren näher erläutert.
- Figur 1: zeigt beispielhaft den Verlauf von Generatordrehzahl n, Blattanstellwinkel Φ und Drehmoment M in einem gemeinsamen Diagramm aufgetragen über die Zeit t.
- Figur 2: stellt die für das in Figur 1 gezeigte Verhalten erforderlichen Regelungsabläufe in einem Flußdiagramm dar.

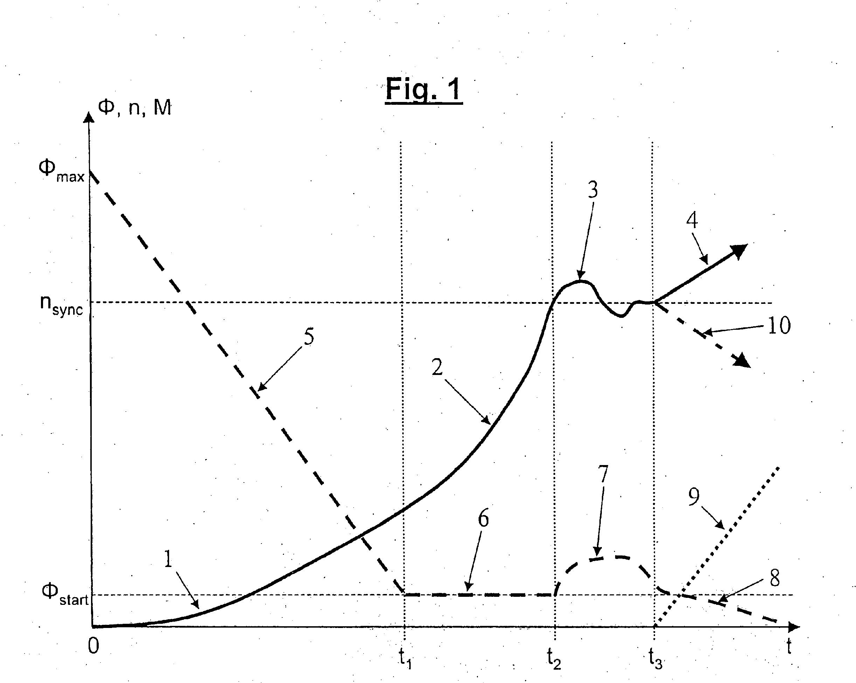

Der in Figur 1 dargestellte Zeitausschnitt beginnt mit dem Anfahren der Windenergieanlage ausgehend von einem stillstehenden Rotor und Generator mit einer Drehzahl n = 0, dargestellt durch den Beginn des Kurvenabschnitts 1 zur Zeit t = 0. Gleichzeitig weist der Blattanstellwinkel einen Maximalwert Φₘₐₓ auf, dargestellt durch den Beginn der Linie 5.

Der Blattanstellwinkel wird kontinuierlich entlang der Line 5 verringert, bis bei t₁ der Minimalwert Φₛₜₐᵣₜ für den Blattanstellwinkel erreicht ist. Gleichzeitig steigt die Drehzahl n des Generators entsprechend der Kurve 1 in einem nicht-linearen Vorgang an.

Zur Zeit t₁ wird der Blattanstellwinkel konstant bei Φₛₜₐᵣₜ gemäß Linie 6 bis zur Zeit t₂ gehalten. In diesem Zeitabschnitt steigt die Generatordrehzahl gemäß Kurve 2 weiter an, bis bei t₂ die Synchronisierdrehzahl n_{sync} überschritten wird.

Zu diesem Zeitpunkt wird die Drehzahlregelung durch Variieren des Blattanstellwinkels voll aktiviert. Dem Überschwingen der Drehzahl im Kurvenabschnitt 3 wird entgegengewirkt, indem der Blattanstellwinkel gemäß Kurve 7 ausgehend von dem Wert Φₛₜₐᵣₜ erhöht wird. Durch diesen Regeleingriff wird zur Zeit t₃ die Synchronisierdrehzahl n_{sync} erreicht.

Zur Zeit t₃ erfolgt auch das Aufschalten der Windenergieanlage auf das Netz. Wie in der Zeichnung dargestellt, erfolgt das Aufschalten immer bei der Sychronisierdrehzahl n_{sync}. Die gepunktet dargestellte Linie 9 zeigt das vom Generator vorgegebene Moment, das von dem Wert Null beginnend linear ansteigt. Der Gradient des Anstiegs ist innerhalb der möglichen Grenzen parametriert.

Die Generatordrehzahl steigt nach dem Aufschalten auf das Netz entsprechend dem Kurvenabschnitt 4 weiter an. Gleichzeitig wird der Blattanstellwinkel entlang der Kurve 8 ausgehend von dem Wert Φₛₜₐᵣₜ weiter verringert, um eine optimale Leistungsausbeute zu erzielen. Man erkennt, daß nach dem Aufschaltzeitpunkt t₃ Blattanstellwinkelregelung und Momentregelung gleichzeitig aktiv sind. Insbesondere kontrolliert die Blattanstellwinkelregelung fortlaufend den Blattanstellwinkel. Diese Kontrolle beinhaltet auch einen Sicherheitsaspekt, da bei Starkwind unter Umständen ein schneller Regeleingriff erforderlich ist, um überhöhte Drehzahlen zu vermeiden.

Eine andere Situation liegt bei sehr geringen Windgeschwindigkeiten vor, bei denen keine ansteigende Drehzahl nach dem Aufschalten erreichten werden kann. In diesem Falle bleibt die Anlage am Netz, auch wenn die Drehzahl unter die Sychronisierdrehzahl sinkt, wie im gestrichelten Kurvenabschnitt 10 dargestellt.

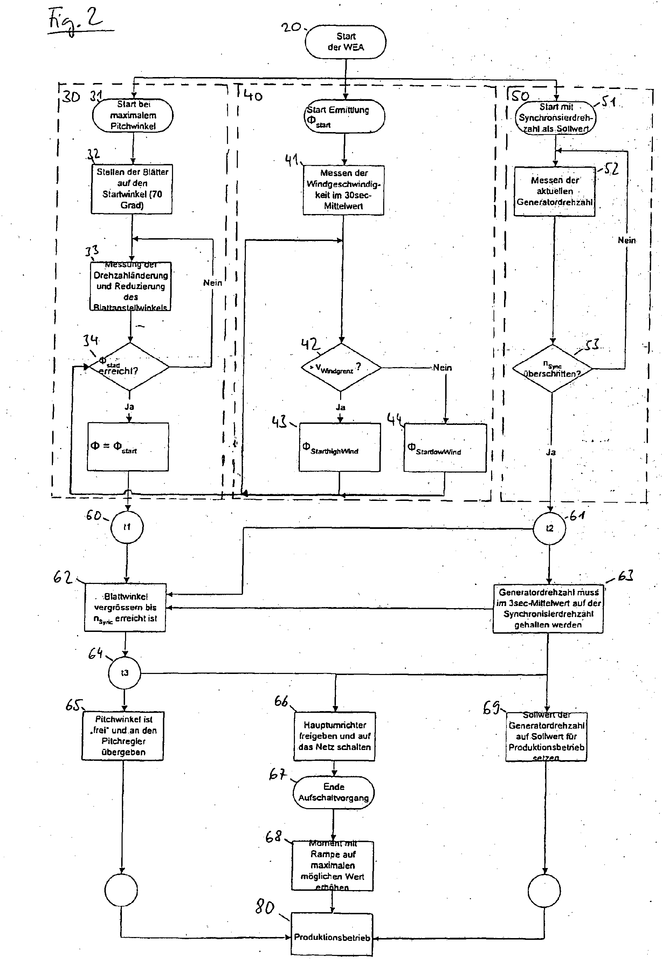

In Figur 2 sind die Abläufe während des Anfahrens der Windenergieanlage in einem Flußdiagramm dargestellt, beginnend mit einem Startbefehl für die Windenergieanlage bei 20 bis hin zum Produktionsbetrieb bei 80. In der oberen Hälfte des Flußdiagramms sind drei Vorgänge parallel dargestellt, die auf den Startbefehl folgend ausgelöst werden. Es sind dies erstens eine Regelung des Blattanstellwinkels (auch als Pitchwinkel bezeichnet) in dem gestrichelt umrandeten Kasten 30, zweitens die Ermittlung eines Blattanstellwinkels Φₛₜₐᵣₜ in dem mit 40 bezeichneten Kasten, und drittens die in dem mit 50 bezeichneten Kasten erfolgende Überwachung der Generatordrehzahl.

Die in dem mit 30 bezeichneten Kasten erfolgende Regelung des Blattanstellwinkels beginnt bei 31 in einer Stellung, in der der Blattanstellwinkel einen maximalen Wert aufweist. Bei 32 wird der Blattanstellwinkel auf einen Startwinkel von 70° eingestellt. Dieser Startwinkel entspricht dem in Figur 1 mit Φₘₐₓ bezeichneten Blattanstellwinkel. In der aus 33 und 34 gebildeten Schleife wird fortlaufend die Drehzahländerung gemessen und der Blattanstellwinkel in Abhängigkeit von der Drehzahl reduziert, bis der Startwert Φₛₜₐᵣₜ erreicht wird.

Der vorgegebene Wert für Φₛₜₐᵣₜ wird parallel in dem mit 40 bezeichneten Kasten ermittelt. Dazu wird bei 41 ein 30-Sekunden-Mittelwert der Windgeschwindigkeit gemessen. Überschreitet dieser Mittelwert bei 42 eine vorgegebene Windgeschwindigkeit V_{windgrenz,} wird Φₛₜₐᵣₜ bei 43 auf einen Wert Φ_{starthighwind} gesetzt, anderenfalls bei 44 auf einen geringeren Wert Φ_{startlowwind}.

Wird innerhalb des mit 30 bezeichneten Kastens der vorgegebene Wert Φₛₜₐᵣₜ für den Blattanstellwinkel erreicht, befindet sich die Anlage zur Zeit t₁ bei 60 in einem Zustand, der dem ebenfalls mit t₁ bezeichneten Zeitpunkt in Figur 1 entspricht.

In dem mit 50 bezeichneten Kasten wird die Generatordrehzahl überwacht. Dazu wird bei 51 als Sollwert zunächst eine Sychronisierdrehzahl n_{sync} vorgegeben. Bei 52 wird die aktuelle Generatordrehzahl fortlaufend gemessen, und bei 53 wird fortlaufend geprüft, ob die Sychronisierdrehzahl n_{sync} überschritten wurde. Ist dies der Fall, befindet sich die Windenergieanlage zur Zeit t₂ bei 61 in einem Zustand, der dem in Figur 1 ebenfalls mit t₂ bezeichneten Zeitpunkt entspricht.

Um einem Überschwingen der Drehzahl über die Sychronisierdrehzahl n_{sync} entgegenzuwirken, wird bei 62 der Blattanstellwinkel zunächst vergrößert. Es erfolgt eine Regelung der Drehzahl durch Variieren des Blattantstellwinkels auf die Synchronisierdrehzahl n_{sync}. Bei 63 wird überprüft, ob die Synchronisierdrehzahl auch in einem 3-Sekunden-Mittelwert eingehalten wird, d.h., ob die für das Aufschalten erforderliche Drehzahl hinreichend stabilisiert worden ist.

In diesem Fall befindet sich die Windenergieanlage zur Zeit t₃ bei 64 in einem Zustand, der dem in Figur 1 ebenfalls mit t₃ bezeichneten Zeitpunkt entspricht.

Zu diesem Zeitpunkt wird die Blattanstellwinkelregelung freigegeben, d.h., daß für maximale Momentaufnahme aus dem Wind auch Blattanstellwinkel unterhalb des Startwerts Φₛₜₐᵣₜ eingestellt werden können und die Regelung des Blattanstellwinkels nicht mehr zum Halten der Synchronisierdrehzahl n_{sync}, wie noch bei 62, dient.

Ebenfalls zum Zeitpunkt t₃ erfolgt bei 66 das eigentliche Aufschalten, d.h. der Hauptumrichter wird freigegeben und die Anlage mit dem Netz verbunden. Damit ist bei 67 der Aufschaltvorgang beendet. Bei 68 ist dargestellt, daß das Generatordrehmoment entlang einer Rampe auf einen maximal möglichen Wert erhöht wird.

Parallel findet zum Zeitpunkt t₃ bei 69 eine Änderung des Sollwerts für die Generatordrehzahl statt. Diese wird von der Synchronisierdrehzahl n_{sync} auf einen Sollwert für den Produktionsbetrieb gesetzt. Damit befindet sich die Windenergieanlage in dem mit 80 gekennzeichneten Produktionsbetrieb.

## Patentansprüche

1. Verfahren zum Betreiben einer auf ein Netz aufschaltbaren, drehzahlvariablen Windenergieanlage mit einem Rotor mit variabler Drehzahl, einem Momentregler, einem Blattanstellwinkelregler und einem Hauptumrichter, wobei vor dem Aufschalten der Windenergieanlage die Drehzahl des Rotors durch Variieren des Blattanstellwinkels geregelt wird, **dadurch gekennzeichnet, dass** ein von der Windgeschwindigkeit abhängiger, konstanter, minimaler Blattanstellwinkel Φₛₜₐᵣₜ ermittelt und vor dem Aufschalten nicht unterschritten wird, wobei der minimale Blattanstellwinkel Φₛₜₐᵣₜ bei Überschreiten einer Grenzwindgeschwindigkeit (V_{windgrenz}) auf einen ersten Wert (Φ_{starthighwind}), anderenfalls auf einen zweiten Wert (Φ_{startlowwind}) gesetzt wird, wobei der zweite Wert (Φ_{startlowwind}) kleiner ist als der erste Wert (Φ_{starthighwind}).

2. Verfahren nach Anspruch 1, **dadurch gekennzeichnet, daß** die Drehzahlregelung auf eine für das Aufschalten auf das Netz geeignete Synchronisierdrehzahl des Generators n_{sync} erfolgt.

3. Verfahren nach Anspruch 1 oder 2, **dadurch gekennzeichnet, daß** die Drehzahlregelung beginnt, nachdem eine Synchronisierdrehzahl n_{sync} überschritten wurde.

4. Verfahren nach einem der Ansprüche 1 bis 3, **dadurch gekennzeichnet, daß** beim Anfahren der Windenergieanlage vor Beginn der Drehzahlregelung der Blattanstellwinkel ausgehend von einem maximalen Blattanstellwinkel Φₘₐₓ kontinuierlich verringert wird.

5. Verfahren nach Anspruch 4, **dadurch gekennzeichnet, daß** die Verringerung des Blattanstellwinkels in Abhängigkeit von der Drehzahl erfolgt.

6. Verfahren nach Anspruch 4 oder 5, **dadurch gekennzeichnet, daß** die Verringerung des Blattanstellwinkels bis zu dem minimalen Blattanstellwinkel Φₛₜₐᵣₜ vorgenommen wird.

7. Verfahren nach einem der Ansprüche 1 bis 6, **dadurch gekennzeichnet, daß** nach dem Aufschalten der Blattanstellwinkel den minimalen Blattanstellwinkel Φₛₜₐᵣₜ unterschreitet.

8. Verfahren nach einem der Ansprüche 1 bis 7, **dadurch gekennzeichnet, daß** nach dem Aufschalten Blattanstellwinkelregler und Momentregler gleichzeitig betrieben werden.

## Claims

1. A method for operating a variable speed wind turbine being connectable to a grid , the wind turbine comprising a variable speed rotor, a torque controller, a blade pitch controller and a main converter, wherein prior to connecting the wind turbine to the grid, the rotor speed is controlled by varying the blade pitch angle, **characterized in that** a constant, minimum blade pitch angle Φₛₜₐᵣₜ dependent on the wind speed is determined, wherein the blade pitch angle does not fall below the minimum blade pitch angle Φₛₜₐᵣₜ prior to connecting to the grid, wherein the minimum blade pitch angle Φₛₜₐᵣₜ is set to a first value (Φ_{starthighwind}) when a wind speed limit (v_{windgrenz}) is exceeded and to a second value (Φ_{startlowwind}) otherwise, wherein the second value (Φ_{startlowwind}) is smaller than the first value (Φ_{starthighwind}).

2. The method according to claim 1, **characterized in that** the speed control is performed to a synchronization speed n_{sync} of the generator that is suited for the process of connecting to the grid.

3. The method according to claim 1 or 2, **characterized in that** the speed control starts after a synchronization speed n_{sync} was exceeded.

4. The method according to any of the claims 1 to 3, **characterized in that** when starting up the wind turbine, before the speed control begins, the blade pitch angle is decreased continuously starting from a maximum blade pitch angle Φₘₐₓ.

5. The method according to claim 4, **characterized in that** the decrease of the blade pitch angle is performed in dependence on the speed.

6. The method according to claim 4 or 5, **characterized in that** the decrease of the blade pitch angle is carried out till the minimum blade pitch angle Φₛₜₐᵣₜ.

7. The method according to any of the claims 1 to 6, **characterized in that** the blade pitch angle falls below the minimum blade pitch angle Φₛₜₐᵣₜ after connecting to the grid.

8. The method according to any of the claims 1 to 7, **characterized in that** after connecting to the grid, the blade pitch controller and the torque controller are operated simultaneously.

## Revendications

1. Procédé de fonctionnement d'une éolienne à vitesse de rotation variable pouvant être connectée à un réseau, avec un rotor à vitesse de rotation variable, un régulateur de couple, un régulateur d'angle d'attaque de pale et un convertisseur principat, la vitesse de rotation du rotor étant régulée par la variation de l'angle d'attaque de pale avant la connexion de l'éolienne, **caractérisé en ce qu'**un angle d'attaque de pale minimal Φₛₜₐᵣₜ constant, dépendant de la vitesse du vent, est déterminé et qu'il n'y a pas de passage au-dessous de cet angle d'attaque de pale Φₛₜₐᵣₜ avant la connexion, l'angle d'attaque de pale minimal Φₛₜₐᵣₜ étant, lors du passage au-dessus d'une vitesse de vent limite (V_{windgrenz}), réglé à une première valeur (Φ_{starthighwind}), sinon il est réglé à une deuxième valeur (Φ_{startlowwind}), la deuxième valeur (Φ_{startlowwind}) étant inférieure à la première valeur (Φ_{starthighwind}).

2. Procédé selon la revendication 1, **caractérisé en ce que** la régulation de la vitesse de rotation s'effectue sur une vitesse de rotation de synchronisation du générateur n_{sync} appropriée pour la connexion au réseau.

3. Procédé selon la revendication 1 ou 2, **caractérisé en ce que** la régulation de la vitesse de rotation commence après le passage au-dessus d'une vitesse de rotation de synchronisation n_{sync}.

4. Procédé selon une des revendications 1 à 3, **caractérisé en ce que**, lors du démarrage de l'éolienne, avant le début de la régulation de la vitesse de rotation, l'angle d'attaque de pale est réduit de façon continue en partant d'un angle d'attaque de pale maximal Φₘₐₓ.

5. Procédé selon la revendication 4, **caractérisé en ce que** la réduction de l'angle d'attaque de pale s'effectue en fonction de la vitesse de rotation.

6. Procédé selon la revendication 4 ou 5, **caractérisé en ce que** la réduction de l'angle d'attaque de pale est réalisée jusqu'à l'angle d'attaque de pale minimal Φₛₜₐᵣₜ.

7. Procédé selon une des revendications 1 à 6, **caractérisé en ce que**, après la connexion, l'angle d'attaque de pale passe au-dessous de l'angle d'attaque de pale minimal Φₛₜₐᵣₜ.

8. Procédé selon une des revendications 1 à 7, **caractérisé en ce que**, après la connexion, le régulateur de l'angle d'attaque de pale et le régulateur de couple fonctionnent simultanément.
